(19) Europäisches Patentamt
European Patent Office
Office européen des brevets

(11) Veröffentlichungsnummer: **0 035 100**
**B1**

(12) # EUROPÄISCHE PATENTSCHRIFT

(45) Veröffentlichungstag der Patentschrift: **28.09.83**

(51) Int. Cl.³: **C 01 B 25/41**, B 01 J 19/28, F 27 B 7/00

(21) Anmeldenummer: **81100256.7**

(22) Anmeldetag: **15.01.81**

(54) **Drehtrommel zur Umsetzung von Alkali-Orthophosphaten zu Tripolyphosphaten.**

(30) Priorität: **01.03.80 DE 3007988**

(43) Veröffentlichungstag der Anmeldung: **09.09.81 Patentblatt 81/36**

(45) Bekanntmachung des Hinweises auf die Patenterteilung: **28.09.83 Patentblatt 83/39**

(84) Benannte Vertragsstaaten: **AT DE GB SE**

(56) Entgegenhaltungen:
**DE-A-1 792 380**
**DE-A-2 037 332**
**DE-A-2 338 507**
**DE-A-2 603 072**
**DE-B-1 181 184**
**DE-B-2 011 336**
**DE-B-2 121 885**
**FR-A-1 327 309**

(73) Patentinhaber: **BABCOCK-BSH AKTIENGESELLSCHAFT vormals Büttner-Schilde-Haas AG, Parkstrasse 29 Postfach 4 und 6, D-4150 Krefeld 11 (DE)**

(72) Erfinder: **Belting, Karl-Wilhelm, Ing.-grad., Niessenstrasse 21, D-4150 Krefeld (DE)**
Erfinder: **Wischniewski, Martin, Ing.-grad., Fabritiusstrasse 38, D-4150 Krefeld 11 (DE)**

(74) Vertreter: **Planker, Karl-Josef, Dipl.-Phys., c/o BABCOCK-BSH AKTIENGESELLSCHAFT Postfach 4 + 6, D-4150 Krefeld 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Drehtrommel zur Umsetzung von Alkali-Orthophosphaten zu Tripolyphosphaten

Die Erfindung betrifft eine mit strömenden Heißgasen, insbesondere im Gleichstrom betriebene und mit Einbauten versehene Drehtrommel zur Umsetzung von Alkali-Orthophosphaten zu Tripolyphosphaten, insbesondere zur Herstellung von Natriumtripolyphosphat der Phase II.

Bei der Herstellung von Natriumtripolyphosphat ($Na_5P_3O_{10}$) geht man bekanntlich von einem Gemisch von Mononatrium- und Dinatrium-Orthophosphat aus. Diese Salze werden meistens ausgehend von wäßrigen Lösungen erhalten, die üblicherweise durch Versprühen getrocknet werden. Sie werden als dann kalziniert, und zwar entweder gleichzeitig mit dem Versrprühen in derselben Wärmebehandlungsanlage (einstufiges Verfahren) oder das Versprühen und Kalzinieren erfolgt in getrennten Anlagen (zweistufiges Verfahren).

Dabei erfolgt die Kalzinierung der Orthophosphate nach folgender chemischer Reaktionsgleichung:

$$NaH_2PO_4 + 2\,Na_2HPO_4 \longrightarrow Na_5P_3O_{10} + 2\,H_2O$$

Das hierbei entstehende Natriumtripolyphosphat kann dabei je nach Temperaturführung des Kalzinierungsvorganges in zwei Modifikationen, einer Phase I (Hochtemperaturphase) und Phase II (Niedrigtemperaturphase) vorliegen. Vergleiche hierzu z. B. DE-B-2 011 336 und DE-A-2 338 507.

Die beiden Phasen I und II haben die gleiche chemische Zusammensetzung und unterscheiden sich in ihrer Kristallform. Für manche Anwendungszwecke, z. B. in der Waschmittelherstellung, ist ein möglichst hoher Gehalt an Phase II erwünscht.

Es ist bei der Herstellung von Natriumtripolyphosphaten bekannt, die Kalzinierung von intermediär entstehenden Orthophosphaten mit Hilfe von mit Heißgasen direkt beheizten Drehtrommeln durchzuführen.

So wird beispielsweise bei dem bekannten Verfahren gemäß der DE-B-1 181 84 dem aus Düsen zugeführten Orthophosphatgemisch kontinuierlich ein wasserfreies Natriumtripolyphosphat der Phase II beigemischt und einer Kalzinier- und Trockeneinrichtung aufgegeben, welche aus einem umlaufenden zylindrischen Rohr besteht. In der Nähe der Beschickungsöffnung dieses Rohres sind Schaufeln angeordnet, welche die Mischung des Eingabegutes durchführen sollen. An diese Trockenzone schließt sich eine Zone an, in der die Wandung des Rohres glatt ist und die die Kalzinierungszone bilden soll. Die Beheizung des Rohres erfolgt mittels Heißgase im Gegenstrom.

Aus der DE-B-2 121 885 ist zu entnehmen, daß es bei der Herstellung von Natriumtripolyphosphaten bekannt ist, eine Orthophosphatmaische in einen mit Mitnehmerblechen, Wendeschaufeln und einen Stauring versehenen Drehrohrofen einzugeben und im Gleichstrom mit Heißgasen zu beheizen. Konkrete Einzelheiten über die Lagen der diversen Einbauten sind dieser Druckschrift nicht zu entnehmen.

Ziel der vorliegenden Erfindung ist nun, die Drehtrommeln der eingangs genannten Art über den bisher bekannten Stand der Technik hinaus derart zu verbessern, daß sie den Erfordernissen bei der Herstellung von Alkali-Tripolyphosphaten in besonders hohem Maße angepaßt sind.

Erreicht wird dies nach der Erfindung dadurch, daß die Trommel in mehrere Behandlungszonen unterteilt ist und die ausgabeseitige Endzone einen erweiterten Durchmesser aufweist.

Dies bietet neben der erhöhten Steuerfähigkeit der einzelnen Herstellungsschritte noch den Vorteil einer reduzierten Rohrlänge.

Erfindungsgemäß weist die Drehtrommel eine mit Förderschaufeln versehene Eingangszone, eine mit Rieseleinbauten versehene Zwischenzone und eine mit Wendeeinbauten versehene erweiterte Endzone auf.

Weiterhin kann zwischen der Zwischenzone und der erweiterten Endzone eine mit Wende- und Rieseleinbauten versehene Übergangszone eingeschaltet sein.

In Weiterführung des Erfindungsgedankens kann schließlich im Anschluß an die Zwischenzone eine Stauzone angeordnet sein.

Weitere Merkmale der Erfindung sind den Patentansprüchen und den in den Fig. 1 und 2 schematisch dargestellten Ausführungsbeispielen der erfindungsgemäßen Drehtrommel zu entnehmen.

In den Fig. 1 und 2 ist eine in den Lagern 1 rotierbar gelagerte Drehtrommel 2 mit einem in seinem Durchmesser erweiterten Endteil 2e eingezeichnet. Angetrieben wird die Trommel durch ein Antriebsaggregat 3. Die offenen Enden der Trommel 2 sind mit einem Gaszuführungsgehäuse 4 bzw. mit einem Gasabzugs- und Gutsausfallgehäuse 5 verbunden. Mit 6 ist eine Feuerung zur Erzeugung von Heißgasen und mit 7 eine Aufgabevorrichtung zur Einführung des Behandlungsgutes in das Trommelinnere bezeichnet. Das Trommelinnere ist in mehrere Behandlungszonen gegliedert. Zum Beispiel nach Fig. 1 in eine Eingangszone A, eine Zwischenzone B, eine Übergangszone D und eine Endzone E. Bei der Ausführungsform nach Fig. 2 ist im Anschluß an die Zwischenzone B noch eine Stauzone C zusätzlich angeordnet.

An der Innenwandung der Trommel sind in der Eingangszone A Förderschaufeln 8, in der Zwischenzone B Rieseleinbauten 9, in der Übergangszone D Wendeeinbauten 10', welche auch mit

Rieseleinbauten 9' kombiniert sein können (Fig. 2) und in der Endzone E Wendeleisten 10 angebracht. Es handelt sich hierbei um Einbauten bekannter Bauart, welche am Umfang der Innenwand der Trommel in üblicher Weise verteilt sind. Die Förderschaufeln sind vorzugsweise als Förderspiralen ausgebildet. Die ausgabeseitige Öffnung der Trommel kann über einstellbare Stauringe 11 in bekannter Weise variiert werden. Die Stauzone C in der Ausführungsform nach Fig. 2 wird durch eine einbautenfreie Zone zwischen den Rieseleinbauten 9 und dem Stauring 11' gebildet.

Die Ausgabe des fertig behandelten Gutes erfolgt durch die Öffnung 5' des Ausfallgehäuses 5, während die Heißgase durch die Öffnung 5'' über einen nicht eingezeichneten Ventilator abgesaugt werden. Im Bedarfsfalle kann die Trommel noch mit auf die Trommelwand einwirkende Gutablösemittel, wie z. B. Klopfeinrichtungen, versehen werden.

Die Trommel wird mit einer Neigung von etwa 30 mm pro m zum Ausgabeende hin geneigt aufgestellt.

Bezüglich der Bemessungen sei beispielsweise angeführt, daß bei einer Gesamtlänge der Trommel von etwa 22 m das erweiterte Rohrende eine Länge von ca. 4 m aufweist, während der aufgabeseitige Rohrteil etwa 16 m lang ist. Die Durchmessererweiterung der ausgabeseitigen Endzone des Drehrohres ist beispielsweise so bemessen, daß hierin eine Reduzierung der im engeren Eingangsteil des Rohres herrschenden Gasgeschwindigkeit auf den halben Betrag erfolgt. Bei den oben angeführten Längenverhältnissen der Trommel wird diese mit etwa zwei Umdrehungen pro Minute betrieben.

Die Gaseintrittstemperatur in die Trommel beträgt ca. 500° C, während die Gasaustrittstemperatur ca. bei 320° C liegt.

Die Gasgeschwindigkeit im Trommelabschnitt mit kleinerem Durchmesser beträgt beispielsweise 2 m pro Sekunde und im erweiterten Trommelteil etwa 1 m pro Sekunde.

Als Heißgase werden beispielsweise die Abgase eines Ölbrenners benutzt.

Die Wirkungsweise der erfindunsgemäß aufgebauten Drehtrommel ist folgende:

Durch die heiße Eingangszone A wird das über die Gutsaufgabe 7 eingegebene, mehr oder weniger noch feuchte Orthophosphatgemisch, welche beispielsweise nach einem bekannten Sprühtrockenverfahren hergestellt ist, unter der Einwirkung der sich mit der Trommel drehenden Förderspirale 8 und der verhältnismäßig starken Neigung der Trommel sehr rasch hindurchgefördert, um die Erhitzung des Eingabegutes unterhalb der kritischen Umwandlungstemperatur des Natriumtripolyphosphates von Phase II in Phase I zu halten. Bei etwa 410 bis 420° C bildet sich bereits die temperaturstabile Phase I des Natriumtripolyphosphates, was, wie oben dargelegt, für einige Anwendungsgebiete unewünscht ist. Es darf neben der Phase II nur noch die bei geringen Temperaturen entstehende metastabile Phase I, welche sich noch in die gewünschte Phase II umkristallisieren läßt, erzeugt werden.

In der darauf folgenden Zwischenzone B wird mit Hilfe der Rieseleinbauten 9 das zu behandelnde Gut mehrmals durch den in Förderrichtung strömenden Heißgasstrom hindurchgeführt. Der durch die Rieselvorhänge gehende Heißgasstrom höherer Geschwindigkeit (etwa 2 m pro Sekunde) sorgt für eine schnelle Abfuhr der bei der Trocknung des Gutes entstehenden Wasserdämpfe. Dies ist sehr wichtig, da die Orthophosphate leicht wasserlöslich sind. Da ihre Löslichkeit mit der Temperatur ansteigt, tritt, je nachdem, wie schnell das freie Wasser oder der Wasserdampf vom Gut wegtransportiert wird, eine mehr oder weniger starke Klebephase auf. Typische Bereiche für eine solche Klebephase sind Gutstemperaturen von 82 bis 121° C und 192 bis 232° C.

In der Übergangszone D wird das Gut durch die Wendeleisten 10 gut durchgemischt und in die erweiterte Endzone E überführt. In der Ausführungsform nach Fig. 2 dienen die Rieseleinbauten 9' der Übergangszone D zur Bildung eines Rieselvorhanges, an dem sich der Heißgasstrom staut und gezwungen wird, sich auf den ganzen erweiterten Raum der Endzone E auszudehnen. Die Heißgasgeschwindigkeit beträgt dann in der erweiterten Endzone nur noch ca. 1 m pro Sekunde, was dazu beiträgt, daß nun auch leichtere, feinkörnige Anteile nicht mehr durch die von den verstellbaren Stauringen 11 vorgegebene Öffnung durch den Heißgasstrom ausgetragen werden und somit auch feinkörnigere Bestandteile dem weiteren Kalzinierungsprozeß in der Endzone E erhalten bleiben, wodurch die Bandbreite der Körnung des Endproduktes nach unten hin erweitert wird und die nachfolgenden üblichen Entstaubungsanlagen entlastet werden.

Nachdem sich das Orthophosphat in den voraufgehenden engeren Trommelteilchen größtenteils zu Tripolyphosphat der Phase II umgesetzt hat, muß sich die langsam verlaufende Umsetzung und die Umsetzung etwaiger weiterer Verbindungen, wie z. B. Pyrophosphat, zu Tripolyphosphat erfolgen. Weiterhin muß noch die entstandene metastabile Phase I in die gewünschte Phase II umkristallisiert werden. Diese Vorgänge benötigen größere Reaktionszeiten und erfolgen deshalb in einem erweiterten Endteil E der Trommel, der für eine Verlängerung der Aufenthaltszeit des Behandlungsgutes sorgt. Der Endteil E der Trommel enthält nur noch Wendeleisten, damit lediglich nur noch die erforderliche gute Durchmischung erfolgt aber möglichst wenig Gut in den austretenden Heißgasstrom gelangt. Durch die Stauzone C in der Ausführung nach Fig. 2 kann ebenfalls die Durchlaufzeit und die behandelte Gutsmenge beeinflußt werden.

**Patentansprüche**

1. Drehtrommel zur Umsetzung von Alkali-Orthophosphaten zu Tripolyphosphaten, insbesondere zur Herstellung von Natriumtripolyphosphat der Phase II, mittels eines Heißgasstroms, insbesondere im Gleichstrom, mit mehreren Behandlungszonen (A, B, C, D, E), von denen zumindest die Eingangszone (A) mit Schaufeln (8) versehen ist, dadurch gekennzeichnet, daß die Schaufeln (8) der Eingangszone (A) als Förderschaufeln ausgebildet sind, daß eine Zwischenzone (B) mit Rieseleinbauten (9) versehen ist und daß eine Endzone (E) einen erweiterten Durchmesser aufweist und mit Wendeeinbauten (10) versehen ist.

2. Drehtrommel nach Anspruch 1, dadurch gekennzeichnet, daß zwischen der Zwischenzone (B) und der erweiterten Endzone (E) eine mit Wende- und/oder Rieseleinbauten (10', 9') versehene Übergangszone (D) eingeschaltet ist.

3. Drehtrommel nach Anspruch 1 oder 2, dadurch gekennzeichnet, daß im Anschluß an die Zwischenzone (B) eine Stauzone (C) angeordnet ist.

4. Drehtrommel nach einem der Ansprüche 1 bis 3, dadurch gekennzeichnet, daß die Förderschaufeln (8) als Förderspirale ausgebildet sind.

5. Drehtrommel nach einem der Ansprüche 1 bis 4, dadurch gekennzeichnet, daß die Rieseleinbauten (9, 9') aus an der Innenwand der Trommel befestigten und über den Umfang gleichmäßig verteilten Hubschaufeln bekannter Bauart bestehen.

6. Drehtrommel nach einem der Ansprüche 1 bis 5, dadurch gekennzeichnet, daß die Wendeeinbauten (10, 10') aus an den Innenwänden der Trommel befestigten und gleichmäßig verteilten Wendeleisten bestehen.

7. Drehtrommel nach einem der Ansprüche 1 bis 6, dadurch gekennzeichnet, daß der Ausgang der Trommel mit einstellbaren Stauscheiben (11) versehen ist.

8. Drehtrommel nach einem der Ansprüche 1 bis 7, dadurch gekennzeichnet, daß auf die Trommelwand, insbesondere im Bereich der Zwischenzone (B) einwirkende Gutablösemittel, wie z. B. Klopfeinrichtungen, vorgesehen sind.

9. Drehtrommel nach einem der Ansprüche 1 bis 8, dadurch gekennzeichnet, daß die Trommel mit einer Neigung von etwa 30 mm pro m zum Ausgabeende hin geneigt ist.

**Claims**

1. Rotary drum for the transformation of alkaline orthophosphates into tripolyphosphates, particularly for the production of sodium tripolyphosphate of phase II, by means of a stream of hot gas, particularly in parallel flow, with several zones of treatment (A, B, C, D, E), of which at least the initial zone (A) is equipped with blades, characterized by the blades (8) of the initial zone (A) being designed as conveyor blades, that an intermediate zone (B) is equipped with an internal showering system (9) and that an end zone (E) has an extended diameter and is equipped with turning blades (10).

2. Rotary drum in accordance with claim 1, characterized by a transition zone (D) being located between the intermediate zone (B) and the flared end zone (E), the transition zone (D) being equipped with turning and/or showering internals (10', 9').

3. Rotary drum in accordance with claim 1 or 2, characterized by a damming zone (C) being arranged after the intermediate zone (B).

4. Rotary drum in accordance with one of the claims 1—3, characterized by the conveyor blades (8) being designed as a conveyor spiral.

5. Rotary drum in accordance with one of the claims 1—4, characterized by the internal showering system (9, 9') consisting of lifter blades of known design evenly distributed over the circumference and attached to the inner wall of the drum.

6. Rotary drum in accordance with one of the claims 1—5, characterized by the turning internals (10, 10') consisting of turning blades evenly distributed and attached to the inner wall of the drum.

7. Rotary drum in accordance with one of the claims 1—6, characterized by the discharge opening of the drum being equipped with adjustable dam rings (11).

8. Rotary drum in accordance with one of the claims 1—7, characterized by material detaching devices acting upon the drum wall, particularly in the area of the intermediate zone (B) being provided, such as rapping devices.

9. Rotary drum in accordance with one of the claims 1—8, characterized by the drum being inclined towards the outlet end by approximately 30 mm per m.

**Revendications**

1. Tambour rotatif pour la transformation d'orthophosphates alcaline en tripolyphosphates, notamment pour la production de tripolyphosphate de sodium de la phase II, moyennant un courant de gaz chauds, notamment un courant parallèle, avec plusieures zones de traitement (A, B, C, D, E), dont

au moins la zone d'entrée (A) est purvue de palettes (8), caractérisé par le fait que les palettes (8) de la zone d'entrée (A) sont conçues en forme de palettes de transport, qu'une zone intermédiaire (B) est équipée d'éléments de ruissellement (9) et qu'une zone d'extrémité (E) présente un diamètre élargi et des éléments de retournement (10).

2. Tambour rotatif selon la revendication 1, caractérisé par le fait qu'entre la zone intermédiaire (B) et la zone d'extrémité élargie (E), il se trouve une zone de transition (D) munie d'éléments de retournement et/ou de ruissellement (10', 9').

3. Tambour rotatif selon l'une des revendications 1 ou 2, caractérisé par le fait qu'à la suite de la zone intermédiaire (B) il se trouve une zone de retenue (C).

4. Tambour rotatif selon l'une des revendications 1 à 3, caractérisé par le fait que les pallettes de transport (8) forment une hélice de transport.

5. Tambour rotatif selon l'une des revendications 1 à 4, caractérisé par le fait que les éléments de ruissellement (9, 9') sont constitués de palettes de relevage, de conception connue, fixées régulièrement sur toute la circonférence intérieure de la virole du tambour.

6. Tambour rotatif selon l'une des revendications 1 à 5, caractérisé par le fait que les éléments de retournement (10, 10') sont constitués de listeaux de retournement fixés régulièrement sur toute la circonférence intérieure de la virole.

7. Tambour rotatif selon l'une des revendications 1 à 6, caractérisé par le fait que l'extrémité de sortie du tambour est muni de disques de retenue réglables (11).

8. Tambour rotatif selon l'une des revendications 1 à 7, caractérisé par le fait qu'il est muni d'éléments de dégagement du produit, comme par exemple des marteaux de frappe, actionnant sur la virole du tambour, notamment dans la zone intermédiaire (B).

9. Tambour rotatif selon l'une des revendications 1 à 8, caractérisé par le fait que le tambour est incliné vers le bas en direction de l'extrémité de sortie d'environ 30 mm par m.

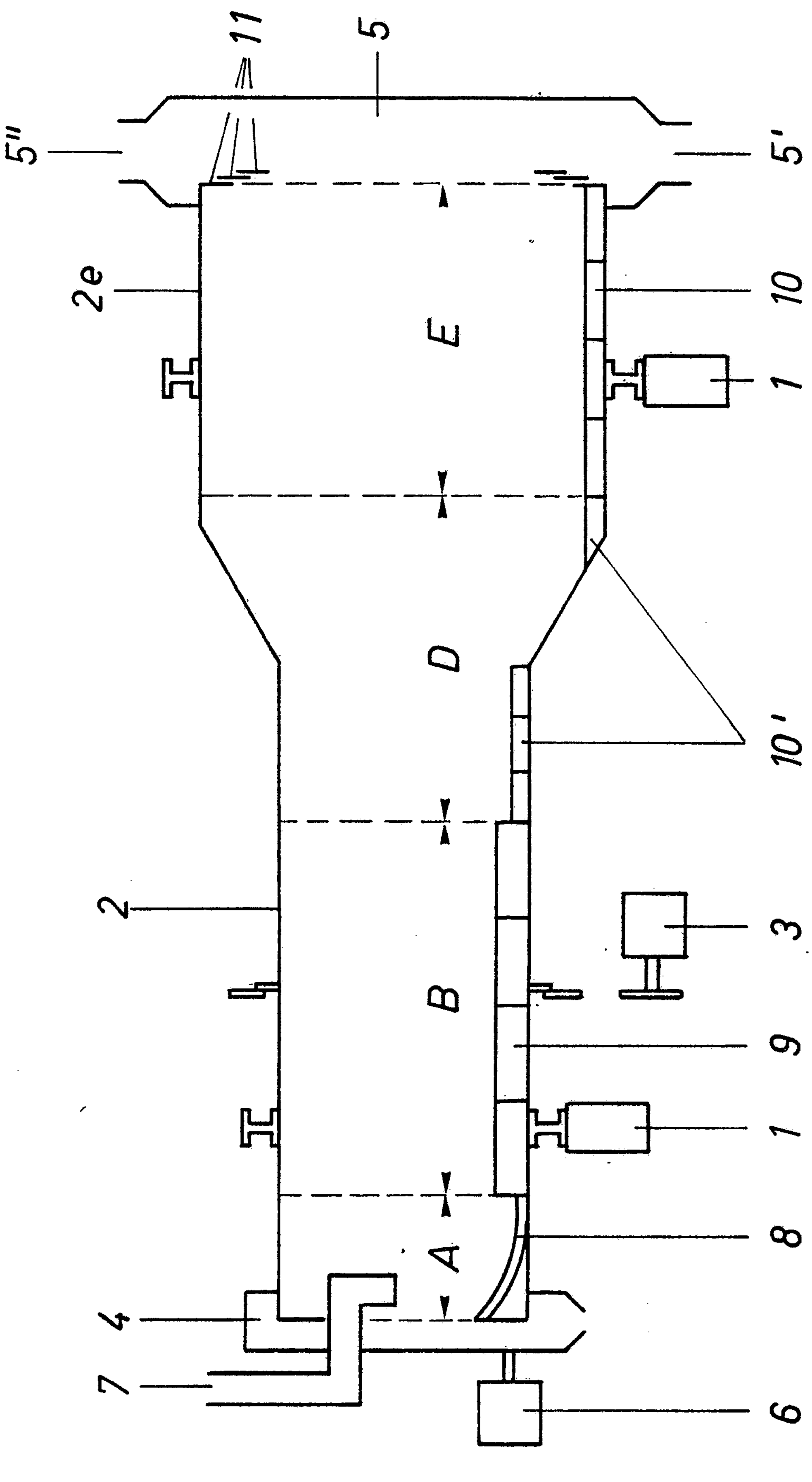


Fig. 1

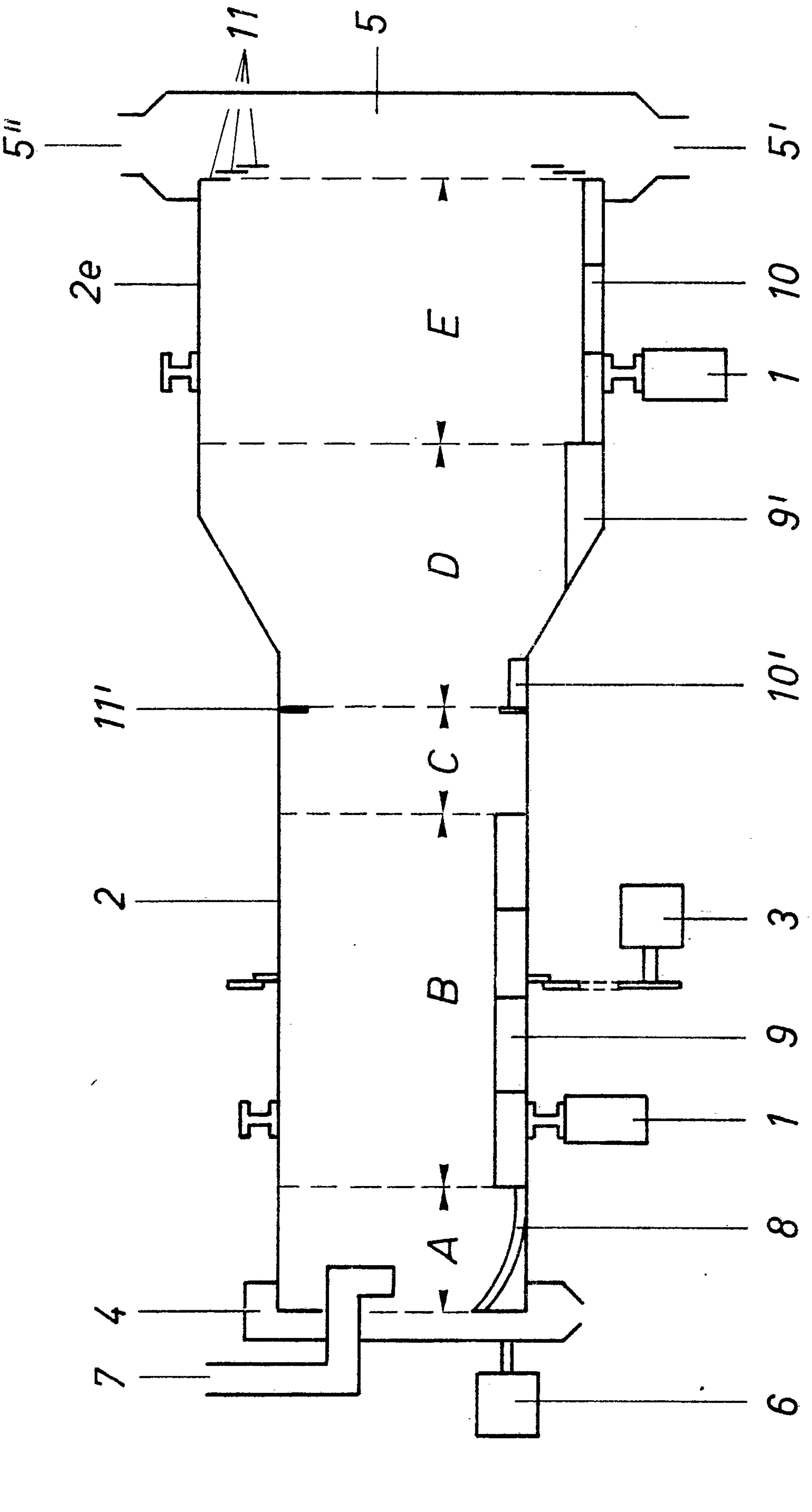


Fig. 2